# EUROPÄISCHE PATENTANMELDUNG

(11) **EP 0 583 646 A2**
(43) Veröffentlichungstag der Anmeldung: **23.02.1994**
(21) Anmeldenummer: 93111798.0
(22) Anmeldetag: 23.07.1993
(51) Int. Cl.: E03F 7/10, B65D 88/60

(54) **Zweikammer-Entsorgungsbehälter mit Ausstosskolben**

(30) Priorität: 08.08.1992 DE 4226333
(71) Anmelder: MABO FAHRZEUG- UND ANLAGENBAU, ENTSORGUNGS-SYSTEME, UMWELTTECHNOLOGIE GmbH & Co., UTEF FORSCHUNG KG, D-59302 Oelde (DE)
(72) Erfinder: Thüner, Udo Th., D-59302 Oelde (DE)
(74) Vertreter: Strauss, Hans-Jochen, Dipl.-Phys., Dr.

(57) **Zusammenfassung**

Um einen Zweikammer-Entsorgungsbehälter mit einem axial verschiebbaren, die Saugkammer mit öffenbarem Deckel von der Druckkammer trennenden, von einer an der Behälterwandung geführte Hülse, deren Lumen mit einer Absperrplatte verschlossen ist und die mit der Innenseite der Behälterwandung zusammenwirkende Führungs- und Dichtungsmittel aufweist, gebildeten Ausstoßkolben, wobei die Behälterwandung mit nach innen gerichteten Anschläge zum Stoppen des bewegten Ausstoßkolbens versehen ist, so weiter zu bilden, daß der Ausstoßkolben sicher abgestoppt und die dabei umzusetzende kinetische Energie ohne Schaden für die Behälterwandung abgefangen wird, wobei der Ausstoßkolben möglichst nahe an das Ende der Saugkammer gelangen soll, wird vorgeschlagen, daß die Hülse (6) des Ausstoßkolbens (5) einen vorgewellten Stauchring (12) aufweist, wobei die am Rand des Aufnahmebehälters (3) angeordneten Stoppanschläge (9), die mit dem Stauchring (12) zusammenwirken, vorzugsweise oberhalb des Sohlenbereichs des Aufnahmebehälters (3) angeordnet sind. des Ausstoßkolbens (5) einen vorgewellten Stauchring (12) aufweist, wobei die am Rand des Aufnahmebehälters (3) angeordneten Stoppanschläge (9), die mit dem Stauchring (12) zusammenwirken vorzugsweise oberhalb des Sohlenbereichs des Aufnahmebehälters (3) angeordnet sind.

## Beschreibung

Die Erfindung betrifft einen Zweikammer-Entsorgungsbehälter, insbesondere von Entsorgungsfahrzeugen, mit einem axial verschiebbaren Ausstoßkolben, der dessen erste, als Saugkammer ausgebildete Kammer mit öffenbarem Deckel von der zweiten als Druckkammer ausgebildeten Kammer trennt, mit einer von der mit nach innen gerichteten Anschläge zum Stoppen des bewegten Ausstoßkolbens versehenen Behälterwandung geführten Hülse, deren Lumen mit einer Absperrplatte verschlossen ist und die mit der Innenseite der Behälterwandung zusammenwirkende Führungs- und Dichtungsmittel aufweist.

Um oft mit aufgesaugtem Material, oft mit Gefahrgut gefüllte Entsorgungsbehälter in einfacher Weise entleeren zu können, wird dieser oftmals mit einer Kippeinrichtung versehen und zum Entleeren gekippt, dabei wird vorausgesetzt, daß das aufgenommene Medium riesel- oder fließfähig ist und frei aus dem gekippten Entsorgungsbehälter auslaufen kann. Anstelle des Kippens mit einer Kippeinrichtung werden auch Ausstoßkolben eingesetzt, die den Entsorgungsbehälter in zwei Kammern unterteilen, und zwar in eine vordere Druckkammer und eine hintere Saugkammer, letztere weist zu einer mit einem öffenbaren Deckel verschlossenen Entleerungsöffnung hin. Diese Saugkammer dient als Sammelbehälter für die aufzunehmenden Medien, die vordere, dem Fahrerhaus zugewandte Kammer wird als Druckkammer zur Bewegung des Ausstoßkolbens eingesetzt, wobei ein Überdruck eine Bewegung in Richtung zu dem hinteren Behälterende hin bedeutet und damit ein Ausstoßen des Materials bewirkt, während bei angelegtem Unterdruck ein Zurückziehen des Ausstoßkolbens in seine Normallage erfolgt. Dazu ist die Druckkammer durch getrennte Saug- und Druckluftleitungen mit einer Vakuum- oder Druckluftpumpe verbunden; die Saugkammer steht über eine gesonderte Saugleitung mit der Vakuumpumpe in Verbindung. Entsprechende Umschaltventile in den zugeordneten Leitungen werden dabei so geschaltet, daß bei Saugbetrieb die Saugkammer unter Unterdruck steht und in der Druckkammer kein Überdruck aufgebaut wird, daß beim Ausstoßen die Druckkammer unter Druck gesetzt wird, und daß schließlich nach Beendigung des Ausstoßens der Kolben durch Unterdruck in der Druckkammer zurückgezogen wird. In jeder der Leitungen ist dabei ein eigenes Absperrventil vorgesehen, die es ermöglichen, den Druck in jeder der beiden Kammern unabhängig voneinander zu steuern.

In der Praxis der Betätigung und der Bewegung des Ausstoßkolbens kommt es immer wieder vor, daß der Ausstoßkolben "hängen" bleibt, und daß sich in der Druckkammer ein Überdruck aufbaut, der zu einer Überlastung des Ausstoßkolbens führt, der bei infolge der Kraftwirkung plötzlichem Lösen infolge dieses Überdruckes in der Druckkammer einen zu hohen Bewegungs-(Gleit-)Impuls erhält und die vorgesehenen Stoppanschläge dicht an der Entleerungsöffnung des Entsorgungsbehälters überfährt oder abreißt, somit über die Öffnung des Behälters ins Freie "schießt". Bei diesem Anschlagen wird Kraft in den letzten Schuß des Entsorgungsbehälters eingeleitete, die bei jedem Anschlagen (auch ohne Bruch der Stoppanschläge) das Material der Wandung beansprucht, dehnt und ggf. auch über die Grenze elastischer Verformung streckt, so daß Rißbildungen nicht auszuschließen sind, die beispielsweise Korrosionsangriffen den Weg öffnen. Darüber hinaus liegt die Geschwindigkeit, die der Ausstoßkolben bei einem derartig unkontrollierten Austreten annehmen kann, bei 30 m/s und stellt mit dem Impuls von um 250.000 Nm eine erhebliche Gefährdung von Mensch und Material in der Umgebung dar. Derartige Vorkommnisse sind auch durch Bedienungsfehler bedingt und - wie sich in der Praxis gezeigt hat - reichen die bisher bekannten Sicherungsmaßnahmen nicht aus, die Gleitbewegung des Ausstoßkolbens unter Kontrolle zu bringen und sicher zu stoppen.

Die EP 0 294 607 A1 beschreibt einen axial verschiebbaren Ausstoßkolben für einen Zweikammerbehälter eines Entsorgungsfahrzeuges zur Aufnahme des aufgesaugten Schlammes. Dieser Ausstoßkolben trennt dessen erste, als Saugkammer ausgebildete Kammer mit öffenbarem Deckel von der zweiten als Druckkammer ausgebildeten Kammer, und ist als eine von der Wandung des Behälters mit Spiel geführte, mit einer deren Lumen verschließenden Absperrplatte versehene Hülse ausgebildet, die an dem druckkammer- und dem saugkammerseitigen Ende zwischen Außenseite der Hülse und Innenseite der Behälterwandung angeordnete Führungsmittel, sowie mindestens einen Dichtungsprofilring zwischen diesen aufweist. Zumindest ein Dichtungsprofilring_{,} vorzugsweise der dem saugkammerseitigen Ende zugeordnete, weist eine mittels eines Druckfluids aufblasbaren Dichtung auf. Die Innenseite der Wandung des Behälters ist mit nach innen gerichteten Anschlägen zum Stoppen des bewegten Ausstoßkolbens versehen ist. Der Ausstoßkolben wird durch den in der Druckkammer des Behälters erzeugten Überdruck eines Druckmediums zum Ausdrücken des aufgesaugten Schlammes in Bewegung gesetzt und bei Erreichen seiner zulässigen Endstellung gestoppt. Dieses Stoppen erfolgt durch Begrenzung der Antriebskraft durch Drucküberwachung, Grenzwert-Manometer o.dgl, oder durch Aufhebung des als Antriebskraft wirkenden Überdruckes, beispielsweise durch eine mittels einer Reißkette aufreißbaren oder mittels einer Sprengpille öffenbaren Druckentlastungsöffnung in der Absperrplatte, oder durch die Weglänge begrenzende Stoppanschläge, wie ein Zuganker oder nach innen gerichteter Anschläge auf der Innenseite der Wandung des Behälters. Zur Vernichtung der kinetischen Energie des ins Gleiten gekommenen Ausstoßkolbens wird ein stauchbarer Vorsatz vorgeschlagen, der die Hülse zur Ausstoßseite hin verlängert.

Da die Mittel zur Begrenzung der Antriebskraft überlistet werden können, da die Mittel zur Begrenzung der Antriebskraft die Gebrauchsfähigkeit aufheben, und da erfahrungsgemäß die die Weglänge begrenzenden Stoppanschläge die beim Auftreffen des Ausstoßkolbens umzusetzende kinetische Energie mit ihrer plötzlichen Ruck-Wirkung im Ansprechfall überlastet werden oder zumindest derartige Kräfte in den letzten Schuß des Entsorgungsbehälters einleiten, daß mit einer die Betriebssicherheit beeinträchtigenden Beeinflussung zu rechnen ist, liegt der Erfindung die Aufgabe zugrunde, diese Nachteile zu vermeiden und den Ausstoßkolben derartig weiter zu bilden, daß der Ausstoßkolben sicher abgestoppt und die dabei umzusetzende kinetische Energie ohne Schaden für die Behälterwandung abgefangen wird, wobei der Ausstoßkolben möglichst nahe an das Ende der Saugkammer gelangen soll.

Diese technische Problemstellung wird nach der Erfindung durch die im Kennzeichen des Anspruchs 1 angegebenen Merkmale gelöst; vorteilhafte Weiterbildungen und bevorzugte Ausführungsformen beschreiben die Unteransprüche.

Zur Lösung dieser Aufgabe wird vorgeschlagen, daß die Hülse des Ausstoßkolbens einen vorgewellten Stauchring aufweist, wobei die am Rand des Entsorgungsbehälters angeordneten Stoppanschläge, die mit dem Stauchring zusammenwirken, vorzugsweise oberhalb des Sohlenbereichs des Entsorgungsbehälters angeordnet sind. Dieser vorgewellte Ring dient als "Knautschzone", die zumindest einen Teil der kinetischen Energie der bewegten Ausstoßkolben beim Anschlagen an die Stoppanschläge in Verformungsarbeit umwandelt und so vernichtet. Diese Stoppanschläge sind zusätzlich zu dem/den Bremsanschlag/-schlägen des/der Dämpfungsglied/-der so angeordnet, daß der Ausstoßkolben zunächst die gesamte Weglänge zum Abbremsen über das Dämpfungsglied verbrauchen kann, bis die Stoppanschläge erreicht werden. Vorzugsweise werden diese mit dem Stauchring zusammenwirkenden Stoppanschläge außerhalb des Sohlenbereichs des Zweikammer-Entsorgungsbehälters angeordnet, sie liegen somit oberhalb der Behältersohle und können so das Ausstoßen aufgenommener Medien nicht wesentlich behindern.

Die Stoppanschläge sind vorteilhaft als etwa rechtwinklig zur Wandung des Zweikammer-Entsorgungsbehälters radial nach innen gerichtete, vorzugsweise mit ihr verbundene Bolzen ausgebildet; alternativ sind die als etwa rechtwinklig zur Wandung des Zweikammer-Entsorgungsbehälters radial nach innen gerichtete, vorzugsweise in eine umlaufende Nut eingesetzte und mit der Wandung verbundene Formstücke ausgebildet, wobei sich die der Rundung der Wandung angepaßten Formstücke über einen gewissen Winkelbereich erstrecken. Durch diese Ausbildung wird erreicht, daß die Stoppanschläge im Falle eines Ansprechens leicht und ohne wesentliche Beeinträchtigung der Wandung des Zweikammer-Entsorgungsbehälter ausgetauscht werden können. Dabei befindet sich die Nut zweckmäßigerweise im Endflansch des Zweikammer-Entsorgungsbehälters, auf den sich als Gegenflansch der Deckelflansch anlegt. Damit ist genügend tiefes Material für das Einsetzen der als Bolzen ausgebildeten Stoppanschläge bzw. für die Nut, in die die als Formstücke ausgebildeten Stoppanschläge eingesetzt und verschraubt werden können, vorhanden. Die Formstücke erstrecken sich dabei über einen gewissen Winkelbereich, so daß die spezifischen (auf die Längeneinheit bezogene) Kräfte durch Wahl der Größe des Winkels unter einen durch die Materialkonstante von Endflansch und Wandung des Behälters vorgegebenen Grenzwert gehalten werden können. Wegen der Entleerung des Zweikammer-Entsorgungsbehälters versteht es sich von selbst, daß die Verteilung dabei derart ist, daß dessen Sohlenbereich frei von Anschlägen gehalten wird. Eine bevorzugte Ausführungsform der Stoppanschläge besteht darin, daß diese eine in Richtung der Bewegung des Ausstoßkolbens nach innen ansteigende Rampe bilden, auf die der Stauchring aufläuft und so nicht mit einem Ruck mit hohem Kraftumsatz abgebremst wird.

Während übliche Ausstoßkolben Führungsmittel in Form einer Packung aufweisen, die gleichzeitig die Abdichtungsaufgabe mit löst, sind in einer bevorzugten Ausführungsform die Führungsmittel des Ausstoßkolbens als als über den Umfang der Hülse des Ausstoßkolbens, vorzugsweise gleichmäßig verteilte Führungsleisten ausgebildet. Diese in Bewegungsrichtung verlaufenden Führungsleisten -beispielsweise 8 Stück im Winkelabstand von 45°- reichen für die Führung des Ausstoßkolbens völlig aus, um den Kolben in seiner zentrischen Lage zu halten. Durch diese Führungsleisten wird die Gefahr des Verklemmens und Festsetzens des Ausstoßkolbens wirksam verkleinert; darüber hinaus bedarf es nicht eines fertigungstechnisch aufwendigen Führungsprofils, das um die Hülse gelegt und mit ihr verschweißt wird. Das Einsetzen der Führungsleisten kann in einfacher Weise auch mittels Verschrauben erfolgen, so daß die immer beanspruchten, dem Verschleiß und auch der Korrosion unterliegenden Führungsleisten auch in einfacher Weise ausgetauscht werden können.

Weiter wird für eine bevorzugte Ausführungsform vorgeschlagen, daß die der saugkammerseitige Dichtung in einer ringförmigen Dichtungsaufnahme aus einem der Hülse vorgesetzten C-Profil angeordnet ist, wobei vorzugsweise der Boden der Dichtungsaufnahme gegenüber der Hülse nach innen versetzt ist. Mit dieser Anordnung des Profils zur Aufnahme der Dichtung wird erreicht, daß die Hülse enger an die InnenWandung des Behälters gebracht werden kann, ohne die Höhe der Dichtung zu verkleinern. Damit kann auch der Hebelarm der Stoppanschläge verringert werden, so daß das auf die Einspannstelle des Stoppanschlags an der Behälterwandung ausgeübte Moment einer auf deren freie Ende einwirkenden Kraft verringert wird.
In einer bevorzugten Ausführungsform ist dieser Stauchring der Dichtungsaufnahme vorgesetzt. Dieser vorgesetzte Ring kann nach einem Ansprechen und dem damit verbundenen Verformen abgebrannt und ein neuer Vorsatz vorgeschweißt werden, womit der Ausstoßkolben ohne weiteres wieder in Betrieb genommen werden kann. Alternativ dazu kann der Stauchring auch der Dichtungsaufnahme nachgeordnet sein; hier überträgt die Dichtungsaufnahme bzw. die Hülse die Stoßkraft auf den Stauchring, der sich bei Einleitung hinreichender Kraft ebenso verformt.

Weiter ist es vorteilhaft, wenn die Hülse des Ausstoßkolbens im Bereich der druckkammerseitigen Führungsleisten und seiner unteren Hälfte mit einem einen Stauchboden bildenden Segment mit achsparallel zumindest über 1/3 der Länge der Hülse verlaufenden Rinnen versehen ist. Dabei sind diese achsparallel verlaufenden Rinnen des Stauchbodens vorzugsweise nach innen abgerundet ausgebildet und in gleichmäßigen Abständen angeordnet. Damit ergibt sich in diesem Bereich eine weitere Sicherheits-Knautschzone, die dann anspricht, wenn bei der Vernichtung besonders hoher Energien der Ausstoßkolben an den Stoppanschlägen so gekippt wird, daß sein vorderes Ende angehoben und sein hinteres auf die Behältersohle gepreßt wird. Dies führt dazu, daß die im oberen Scheitelbereich angeordneten Stoppanschläge mit verkürztem Hebelarm beansprucht werden, so daß die auf diese wirkenden Verwindungskräfte verringert werden. Damit wird der Ausstoßkolben endgültig gestoppt, ohne daß der Entsorgungsbehälter überbeansprucht wird; allerdings wird der Ausstoßkolben dabei im allgemeinen so verformt, daß eine größere Reparatur notwendig werden kann. Bei dieser Ausführungsform werden die Stoppanschläge oberhalb der Sohle des Entsorgungsbehälters angeordnet, so daß in dessen Sohlenbereich keine das Ausstoßen des aufgenommenen Mediums störenden Vorsprünge vorhanden sind.

In vorteilhafter Weise ist die Hülse mit mindestens einem kinetische Energie aufzehrenden Dämpfungsglied versehen, wobei korrespondierend zu den Dämpfungsgliedern jeweils ein mit einem der Dämpfungsglieder zusammenwirkender Bremsanschlag auf der Wandung des Zweikammer-Entsorgungsbehälters vorgesehen ist, wobei der/die mit dem/den Dämpfungsglied/-gliedern zusammenwirkende/-n Bremsanschlag/-schläge in 12-Uhr Position bzw. symmetrisch dazu beidseits angeordnet sind, und die mit auf der Wandung des Zweikammer-Entsorgungsbehälters angeordneten Bremsanschlägen zusammenwirken. Dieses Dämpfungsglied bzw. diese Dämpfungsglieder ist/sind in Alternativen als hydraulisch oder pneumatisch arbeitende Zylinder ausgebildet; in anderen Alternative sind die Dämpfungsglieder Druckfedern, elastische Puffer o.dgl. Diesen Alternativen ist gemeinsam, daß die plötzliche Einleitung einer großen Kraft mit großem Ruck (d³ s/d t³) abgeflacht wird. Dabei wird bei dem Hydraulikzylinder die übertragene Energie vernichtet, während die Druckfeder die Energie speichert. Der Pneumatikzylinder kann so ausgebildet sein, daß die von ihm übernommene Energie nicht "verloren" geht, sondern für spätere Nutzung gespeichert wird. Die Zylinder zeigen bei langsamen Bewegungsablauf keine wesentliche Rückwirkung auf die Bewegung, während bei einem raschen Aufprall die eigentliche Dämpfungswirkung einsetzt. Der Pneumatikzylinder kann so ausgebildet sein, daß der eine Druckerhöhung in einem Speicher bewirkende Energieeintrag durch den erhöhten Druck nicht verloren geht, sondern für späteren Einsatz zur Verfügung steht; dies gilt insbesondere auch für ein Gasdruckpolster, mit dem ein hydraulische Zylinder ausgestattet sein kann.

Eine bevorzugte Ausführungsform mit einer Begrenzung des Weges des Ausstoßkolbens auch in Richtung Fahrerhaus hin, also beim Zurückziehen mittels Unterdruck in der Druckkammer, ist dadurch gegeben, daß der/ die Zylinder als doppeltwirkender/-e Zylinder mit beidseits herausgeführter/-n Kolbenstange/-en ausgebildet ist/sind, und daß der Zweikammer-Entsorgungsbehälter druckkammerseitig dazu korrespondierend, mit der/den Kolbenstange/-n zusammenwirkenden/-de Bremsan-Schlag/-schläge aufweist/-sen. Ein derartiger Zylinder weist beidseits Kolbenstangen auf, eine davon wirkt mit den saugkammerseitigen Bremsanschlägen zusammen, die andere mit druckkammerseitig vorgesehenen Bremsanschlägen. Damit ergibt sich im Bereich der druckkammerseitigen Endlage eine Wegbegrenzung, die ebenso wie die saugkammerseitige den bewegten Ausstoßkolben ruckfrei abbremst und so die Gefahr eines Aufpralls auf den die Druckkammer abschließenden Behälterboden und somit einer Einleitung von Kräften in die Behälterwandung unterbindet. Da diese Seite des Entsorgungsbehälters ständig geschlossen ist, bedarf es hier keiner weiteren Maßnahmen gegen ein ungewolltes "Ausschießen" des Ausstoßkolbens.

Alternativ ist das Dämpfungsglied als elastischer Puffer oder als Feder, insbesondere als Druckfeder ausgebildet; die Druckfeder wird dabei vorteilhaft durch eine Tellerfeder bzw. ein Tellerfederpaket realisiert. Dabei sind das/die Dämpfungsglied/-glieder im oberen Bereich des Ausstoßkolbens angeordnet und wirken korrespondierend mit Bremsanschlägen zusammen, die im Bereich des oberen Scheitels des Zweikammer-Entsorgungsbehälter vorgesehen sind, und vorzugsweise in bzw. symmetrisch zur 12-Uhr Position angeordnet sind. Ist lediglich ein Dämpfungsglied vorgesehen, soll es sich in der 12-Uhr Position befinden, bei mehreren Dämpfungsgliedern befinden sich diese -bei gerader Anzahl- beidseits des Scheitels oder -bei ungerader Anzahl- beidseits des Scheitels und in diesem; vorzugsweise werden die beidseits des Scheitels liegenden in einer 1 bis 3-Uhr bzw. einer 9 bis 11-Uhr Position angeordnet. Mit diesen Vorschlägen werden die Lage der Dämpfungsglieder in einem Bereich vorgegeben, der im Regelfall nicht mit Gefahrgut gefüllt ist. Damit werden auch diese Dämpfungsglieder vor im Gefahrgut-Bereich nie auszuschließenden Korrosionsangriffen oder Verkleben bewahrt; in dieser Anordnung werden sie somit funktionsfähig bleiben.

Vorteilhaft ist/sind der/die Bremsanschlag/-schläge des/der Dämpfungsglied/-glieder zusätzlich zu den Stoppanschlägen so angeordnet, daß der Ausstoßkolben zunächst die gesamte Weglänge zum Abbremsen über das mit dem Bremsanschlag zusammenwirkende Dämpfungsglied verbrauchen kann, bis die Stoppanschläge erreicht werden und noch vorhandene Restenergie als Verformungsarbeit verbraucht wird. Dieses wird durch die Lage der Dämpfungsglieder in Bezug auf die Hülse des Ausstoßkolbens oder bei Verwendung von Zylindern als Dämpfungsglieder durch die Länge ihrer Kolbenstangen erreicht.

Da sich Hydraulikzylinder bei sehr schnellem Krafteintrag nahezu wie starre Körper verhalten ist es vorteilhaft, wenn der hydraulisch arbeitenden Zylinder ein zusätzliches Dämpfungselement aufweist. Dieses Dämpfungselement kann dabei als Gaspolster im Zylinder ausgebildet sein, es kann aber auch als mit der Kolbenstange zusammenwirkende Druckfeder ausgebildet sein. In beiden Fällen wird der zeitliche Verlauf des Eintragens der Kraft in den Hydraulikzylinder so abgeflacht, so daß dieser seine Wirkung ordnungsgemäß entfalten kann. Gleiches kann auch mit elastischen Puffern oder Federn, insbesondere Druckfedern, die vorteilhaft als Tellerfedern bzw. als Tellerfederpakete realisiert sind, erreicht werden. Dabei können diese zusätzlichen Dämpfungsglieder mit dem Zylinder in Reihe geschaltet sein, etwa dadurch, daß sie an der Spitze der Kolbenstange angeordnet sind; sie können jedoch auch parallel zu den Dämpfungsgliedern geschaltet sein, etwa dadurch, daß sie gemeinsam mit der jeweiligen Kolbenstange des zugeordneten Dämpfungsgliedes mit dem dieser Einheit zugeordneten Bremsanschlag zusammenwirken.

Vorteilhaft wird schließlich als letztes sicherheitstechnisches Glied der Öffnungsweg des öffenbaren Deckels des Zweikammer-Entsorgungsbehälters so begrenzt, daß seine Öffnungsweite kleiner als 90° bleibt. Dadurch würde ein alle Sicherheitsmaßnahmen überwindender Ausstoßkolben letztendlich am Deckel angehalten und an einem unkontrollierten Austreten in die freie Umgebung gehindert werden.

Das Wesen der Erfindung wird an Hand der in den Figuren 1 bis 8 dargestellten Ausführungsbeispielen eines gattungsgemäßen Ausstoßkolbens näher erläutert; dabei zeigen
- Fig. 01:: Eine Seitansicht eines Entsorgungsfahrzeugs mit geöffneten Zweikammer-Entsorgungsbehälter mit Ausstoßkolben;
- Fig. 02:: Eine Aufsicht auf ein Entsorgungsfahrzeug entsprechend Fig. 1;
- Fig. 03:: Ansicht der geöffneten Stirnseite des Entsorgungsbehälters mit Ausstoßkolben;
- Fig. 04:: Eine (abgebrochene) Darstellung des in der Endstellung "Ausstoßen" befindlichen einfach wirkenden Ausstoßkolbens mit Dämpfungszylinder und Bremsanschlag in 12-Uhr-Position, Fig. 4a: Einzelheit "A" (Fig. 4);
- Fig. 05:: Eine Darstellung des Ausstoßkolbens mit doppelt-wirkendem Dämpfungszylinder und Kolbenstange zurückgezogener Neutralstellung;
- Fig. 06:: Eine Einzelheit des Ausstoßkolbens mit vorgesetztem, gewellten Stauchring sowie mit Stauchboden,
Fig. 6a: Stirnseitige Ansicht von der Druckseite her gesehen,
Fig. 6b: Seitansicht des Ausstoßkolbens nach Fig. 6a,
- Fig. 07:: Einzelheit "B" (Fig. 6) mit als C-Profil ausgebildeter Dichtungsaufnahme,
Fig. 7a: Schnitt außerhalb der Führungsleisten,
Fig. 7b: Schnitt in Bereich der der Dichtung vorgeordneten Führungsleiste,
Fig. 7c: Schnitt im Bereich der der Dichtung nachgeordneten Führungsleisten;
- Fig. 08:: Befestigung der Brems- und Stoppanschläge in einer im Endflansch vorgesehen, umlaufenden Nut,
Fig. 8a: Bremsanschlag, zusammenwirkend mit Dämpfungsglied,
Fig. 8b: Stoppanschlag, zusammenwirkend mit Stauchring.

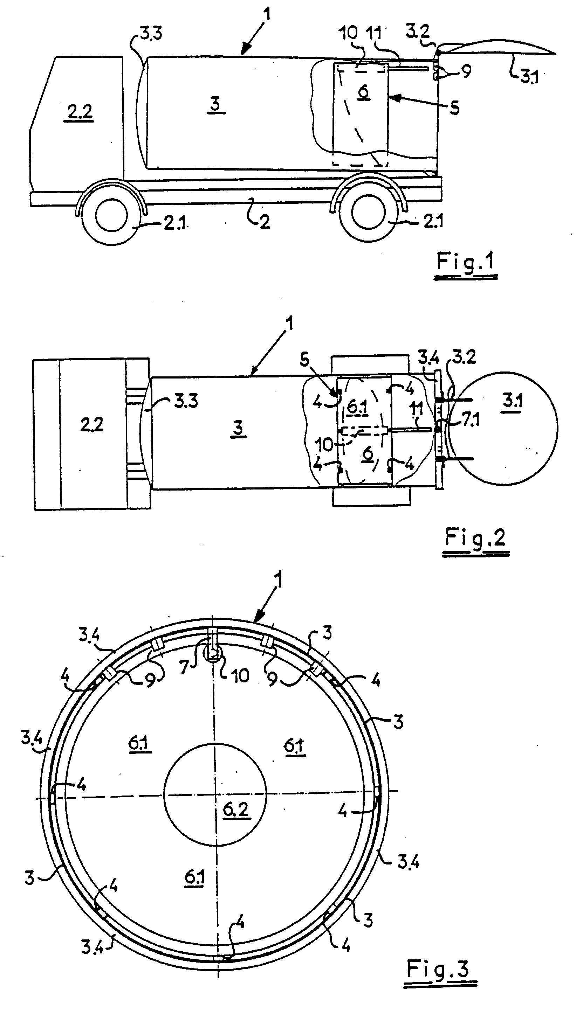

Die Figuren 1 und 2 zeigen eine Seitansicht und eine Aufsicht eines Entsorgungsfahrzeugs 1. Auf seinem Chassis 2 mit den Rädern 2.1 ist das Fahrerhaus 2.2 aufgesetzt, der Antriebsmotor liegt im allgemeinen unter dem Fahrerhaus 2.2. Das Chassis nimmt weiter den eigentlichen, das zu entsorgende Medium aufnehmenden Zweikammer-Entsorgungsbehälter 3 auf, der zur Entleerung seiner Saugkammer und zu deren Reinigung mit einem saugkammerseitigen, öffenbaren Verschlußdeckel 3.1 versehen ist, der um die Deckelscharniere 3.2 schwenkbar ist und so die Entleerungsöffnung des Zweikammer-Entsorgungsbehälters 3 verschließen und frei geben kann. Die Deckelscharniere 3.2 werden vorteilhaft an einem am Ende des Entsorgungsbehälters 3 vorgesehenen, die gesamte Behältermündung umgebenden Verstärkungsflansch 3.4 angebracht, wobei dieser Verstärkungsflansch auch die Dichtung aufnimmt, die den Entsorgungsbehälter 3 gegen seinen öffenbaren Verschlußdeckel 3.1 abdichtet. Die zur Verriegelung des Verschlußdeckels 3 üblichen Verriegelungselemente sind hier nicht im einzelnen dargestellt. Dem saugkammerseitigen Ende des Zweikammer-Entsorgungsbehälters 3 abgewandt ist die Druckkammer angeordnet, die mit einem festen Boden 3.3 verschlossen ist. Der Ausstoßkolben 5 wird von auf seinem Umfang angeordneten, sich parallel zu seiner Achse erstreckende Führungsleisten 4 zentrisch in dem Entsorgungsbehälter 3 gehalten; durch diese Führungsleisten 4 wird die Reibung an der Innen-Wandung des Entsorgungsbehälters entscheidend verringert und so einem Festsetzen vorgebeugt.

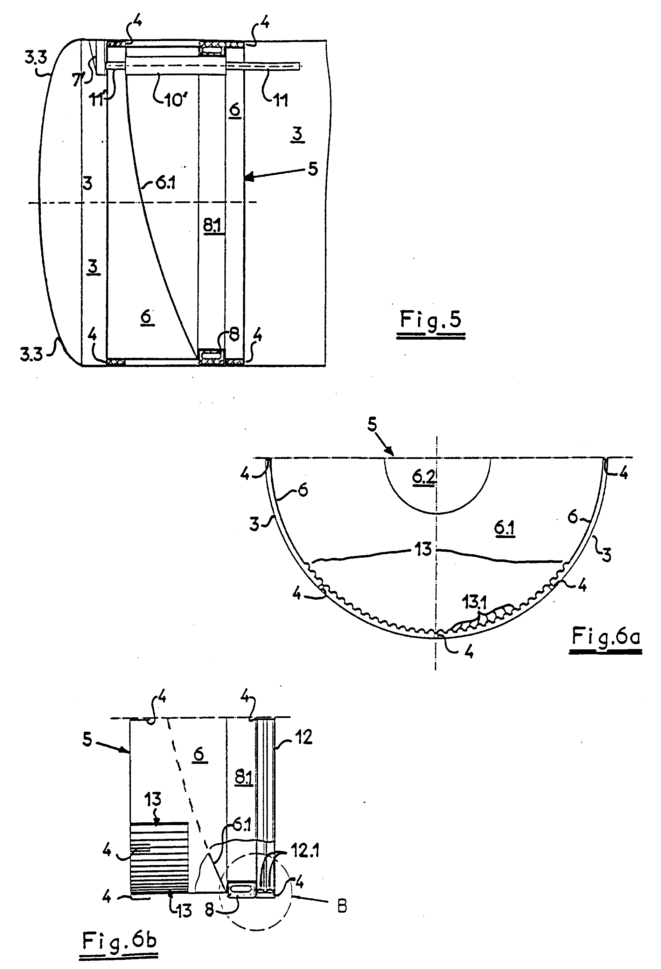

Der Entsorgungsbehälter 3 enthält zur Beschleunigung des Entleerens und zum Ausstoßen schwer fließender Stoffe einen Ausstoßkolben 5, der mittels Über- oder Unterdruck bewegt wird. Zum Ausstoßen wird der verschlossene Teil des Zweikammer-Entsorgungsbehälters 3 über eine (nicht im einzelnen dargestellte), ihn mit einem ebenfalls nicht näher dargestellten Druck/Saugaggregat verbindende Druckleitung unter Überdruck gesetzt, so daß auf den Ausstoßkolben 5 eine Kraft wirkt, die ihn in Richtung "Entleerungsöffnung" treibt. Im Normalfall wird das aufgesammelte Gut im Entsorgungsbehälter 3 dabei ausgestoßen. Der Ausstoßkolben 5 besteht im wesentlichen aus der Hülse 6, deren Lumen von einer absperrenden Trennwand 6.1 verschlossen ist, so daß sich im geschlossenen Teil des Entsorgungsbehälters 3 der notwendige Druck aufbauen kann. In dieser Trennwand kann -etwa zu Inspektionszwecken- ein Mannloch 6.2 (Fig. 3, 6a) vorgesehen sein.

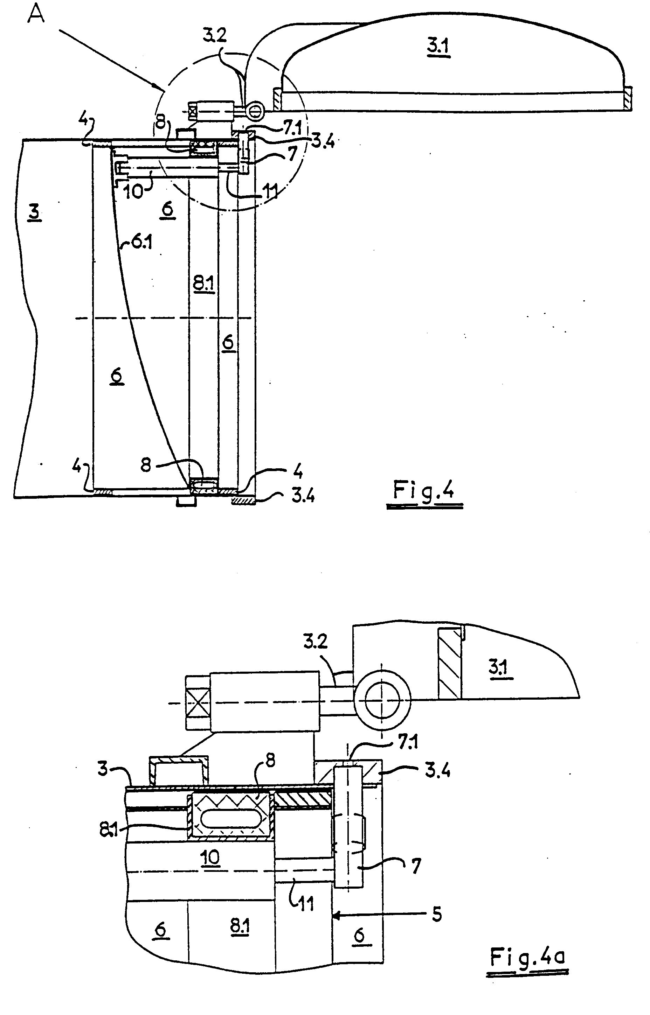

Die Figur 3 zeigt eine Ansicht der Stirnseite des Entsorgungsfahrzeugs 1 mit geöffneter Entleerungsöffnung, (wobei die geöffnete Entleerungsklappe 3.1 nicht dargestellt ist). In dieser Ansicht ist zu erkennen, daß der Ausstoßkolben 5 zentrisch im zylindrischen Innenraum des Zweikammer-Entsorgungsbehälters 3 geführt ist, und zwar mittels über den Umfang verteilte Führungsleisten 4. In der gezeigten Ansicht hinter diesen Führungsleisten 4 liegt die Dichtung 8, die vorteilhaft aufblasbar ausgebildet ist. Zum Abbremsen der Kolbenbewegung ist -hier in 12-Uhr-Position im Scheitel des Entsorgungsbehälters 3 dargestellt- ein Dämpfungszylinder 10 angeordnet, dessen verschiebbarer Kolben über eine Kolbenstange 11 (Fig. 4) verschoben wird, wenn die Kolbenstange 11 an einem Bremsanschlag 7 anstößt. In dieser Ansicht sind weiter die zusätzlichen Stoppanschläge 9 dargestellt, die mit dem Ausstoßkolben zusammenwirken, um den Stauchring zu aktivieren.

Die Figur 4 zeigt eine Schnittdarstellung durch den Zweikammer-Entsorgungsbehälter 3 mit Ausstoßkolben 5, der sich in seiner Endstellung "Ausstoßen" befindet. Dabei liegt das Ende des Ausstoßkolbens 5 unmittelbar an der Öffnung des Zweikammer-Entsorgungsbehälters 3, dessen Verschlußdeckel 3.1 geöffnet ist; die Figur 4a zeigt eine vergrößerte Einzelheit davon. In dieser Lage hat der Ausstoßkolben 5 den Inhalt des Entsorgungsbehälters 3 (nahezu) vollständig ausgedrückt; ein vor der Dichtung 8 verbleibenden Spalt kann zum Reinigen ohne besondere Schwierigkeiten etwa mit einem Wasserschlauch ausgespritzt werden. Der Ausstoßkolben trennt die Druckkammer von der das aufgesaugte Medium aufnehmenden Saugkammer; um dabei den für die Kolbenbewegung notwendigen Druckunterschied aufbauen zu können, und um ein "Überlaufen" des aufgenommenen Mediums zu vermeiden, ist in die Hülse 6 des Ausstoßkolbens 5 die Trennwand 6.1 eingesetzt, vorteilhaft so, daß ihre Unterkante auf die Ausstoßöffnung bezogen vorausgeht. Die hier dargestellte Krümmung der Trennwand 6.1 erhöht deren Stabilität gegenüber einem Überdruck in der geschlossene Druckkammer des Zweikammer-Entsorgungsbehälters 3. Der Ausstoßkolben 5 wird mittels der Führungsleisten 4, die auf der Innenseite des Mantels des Entsorgungsbehälters 3 gleiten, zentrisch geführt, wobei diese Führungsleisten 4 symmetrisch über den Umfang verteilt, nahe dem vorderen und nahe dem hinteren Ende des Ausstoßkolbens 5 angeordnet sind. Eine umlaufende Dichtung 8 sorgt für die notwendige Abdichtung zum einen der Druckkammer gegenüber der Saugkammer, um das Aufbauen des für die Kolbenbewegung notwendigen Druckes zu ermöglichen, zum anderen verhindert die Dichtung ein Übertreten des aufgesaugten Mediums in die Druckkammer und schiebt beim Gleiten des Ausstoßkolbens das aufgesammelte Medium vor sich her. Zu diesem Zweck ist auch vorgesehen, daß an die Dichtung eine zur öffenbaren Seite hin weisende Lippe angeformt ist.

Im dargestellten Schnitt befindet sich der Ausstoßkolben 5 im Aufnahmebehälter 3 nahe der offenen Ausstoßöffnung, wobei der Bremsanschlag 7 die Kolbenstange 11 des Dämpfungszylinders 10 aufgehalten und eingedrückt hat; dabei wird kinetische Energie des Ausstoßkolbens vom Dämpfungszylinder übernommen und so dem Ausstoßkolben entzogen. Der Verbleib dieses Energieanteils hängt von der Art Dämpfungszylinders 10 ab; während ein reiner Federkolben diese Energie speichert, um sie nach Wegfall der Kraft wieder frei zu setzen, formt eine reiner Strömungszylinder diese Energie letztendlich in Wärme um, sofern nicht ein komprimierbares Gaspolster zur Speicherung eines Teiles der Energie vorgesehen ist; es versteht sich von selbst, daß diese gespeicherte Energie für die Rückbewegung des Ausstoßkolbens 5 (oder zumindest der Einleitung dieser Rückbewegung) dienen kann. Vorteilhaft ist daher entweder eine Feder oder ein Gaspolster so vorgesehen, daß lediglich einen Teil der kinetischen Energie des Ausstoßkolbens übernommen wird. Der Bremsanschlag 7 wird in vorteilhafter Weise im Verstärkungsflansch 3.4 des Zweikammer-Entsorgungsbehälters 3 verschraubt; er befindet sich dadurch in unmittelbarer Nähe des offenen Endes des Zweikammer-Entsorgungsbehälters 3. Mit dieser Anordnung des Bremsanschlags 7 ist zum einen die Krafteinleitung optimal und zum anderen ein Auswecheln des Bremsanschlages bei einer Überlastung in einfacher Weise möglich. Dabei können diese Anschläge so ausgebildet sein, daß der Betreiber des Entsorgungsfahrzeugs bzw. des Entsorgungsbehälters an Hand zurückbleibender Marken Überlastungen zu erkennen in der Lage ist, und so bei einem Verschweigen derartiger Zwischenfälle unzulässiger Belastugen durch das Bedienungspersonal diese erkennen kann.

Die Figur 5 zeigt einen der Figur 4 entsprechenden Schnitt durch den Entsorgungsbehälter 3 mit Ausstoßkolben 5, wobei sich hier der Ausstoßkolben 5 in seiner hinteren Ruhelage befindet. In dieser Lage bedarf der Ausstoßkolben 5 wegen der beim Zurückziehen mittels Unterdruckes begrenzten Kraft an sich keiner besonderen Sicherung; im Zusammenwirken mit dem hier dargestellten, doppeltwirkenden Dämpfungszylinder 10' läßt sich jedoch hier ein abgebremstes Anfahren auch dieser Position erreichen, wenn Bremsanschläge 7' nahe dem den Entsorgungsbehälter 3 am druckkammerseitigen Ende verschließenden Boden 3.4 vorgesehen sind. Beim Zurückziehen fährt die wegen des Anfahrens des saugkammerseitigen Bremsanschlages 7 durchgeschobene, druckkammerseitige Kolbenstange 11' gegen diesen Bremsanschlag 7' und wird wiederum durchgeschoben, diesmal jedoch in Gegenrichtung, so daß nunmehr die Kolbenstange 11 wiederum bereit ist, beim Ausstoßen mit dem im Bereich der Ausstoßöffnung vorgesehen Bremsanschlag 7 zusammen zu wirken. Der Dämpfungswiderstand des Dämpfungszylinders setzt auch dabei die kinetische Energie des Ausstoßkolbens 5 um und bremst so den Ausstoßkolben ab, der so ohne wesentlichen Aufwand ruhig in seine Endstellung gleitet. Sofern kein doppeltwirkender Zylinder vorgesehen ist, wird eine Kraftreserve vorgesehen, die bei Entlastung die Kolbenstange 11 so aussschiebt, daß sie die für die zum Entleeren des Entsorgungsbehälters saugkammerseitig überstehende Lage automatisch bekommt.

Die Figuren 6 zeigen den Ausstoßkolben 1 mit einem der Hülse 6 vorgesetzten Stauchring 12 und einem weiteren Stauchbereich in ihrem Boden; dazu ist ein bodennahes Segment als Stauchboden 13 mit achsparallel verlaufenden Wellen 13.1 versehen, die bei einem Verkanten des Ausstoßkolbens 5 durch das Anfahren des Dämpfungsgliedes an den Bremsanschlag 7 oder des Stauchringes 12 an die vorteilhaft nur oberhalb des Sohlenbereichs des Zweikammer-Entsorgungsbehälters 3 vorgesehenen Stoppanschläge 9 wirksam werden. Reicht die Bremswirkung der Dämpfungsglieder 10 nicht aus, um die gesamte kinetische Energie des Ausstoßkolbens abzufangen, schiebt sich der Stauchring 12 gegen die vorteilhaft oberhalb des Sohlenbereichs des Zweikammer-Entsorgungsbehälters 3 angeordneten Stoppanschläge 9, die diesen Stauchring 12 verformen und so die restliche kinetische Energie des Ausstoßkolbens 5 in Verformungsarbeit umsetzen. Bei diesem Anfahren wird der saugkammerseitige Teil des Ausstoßkolbens 5 gehoben und sein druckkammerseitiger Teil abgesenkt, was zu einem Aufpressen des bodennahen Segments der hinteren Hülsen-Partie auf die Sohle des Entsorgungsbehälters 3 führt. Durch die achsparallel verlaufenden Wellen kann sich dieser Teil der Hülse 6 verformen, so daß auch hier kinetische Energie in Verformungsarbeit umgesetzt und so dem Ausstoßkolben 5 entzogen wird. In der Figur 6a ist die druckkammerseitige Stirnansicht des (mittig abgebrochenen) Ausstoßkolbens dargestellt; hier ist der Ausstoßkolben 5 in der angedeuteten Wandung des Entsorgungsbehälters 3 dargestellt, wobei ihn die Führungsleisten 4 gegenüber dieser Wandung abstützen. Im Lumen der Hülse 6 ist die Trennwand 6.1 zu erkennen, in deren Mitte ein Mannloch 6.2 angedeutet ist. Die Figur 6b zeigt diesen abgebrochenen Ausstoßkolben 5 in Seitansicht, der im Bereich der Dichtung 8 zur besseren Darstellung aufgeschnitten ist. Hier sind der druckkammerseitige Stauchboden 13 und der saugkammerseitig vorgesetzte Stauchring 12 zu erkennen, sowie die Dichtungsaufnahme 8.1, die als umlaufendes C-Profil ausgebildet ist. Die Dichtung 8 selbst ist oftmals so ausgebildet, daß sie mittels Druckluft aufgeblasen werden kann. Dazu ist die Dichtung selbst an eine Druckluftquelle anschließbar und entsprechend dicht, oder in einen Hohlraum der Dichtung ist ein an eine Druckluftquelle gesondert angeschlossener Schlauch eingelegt.

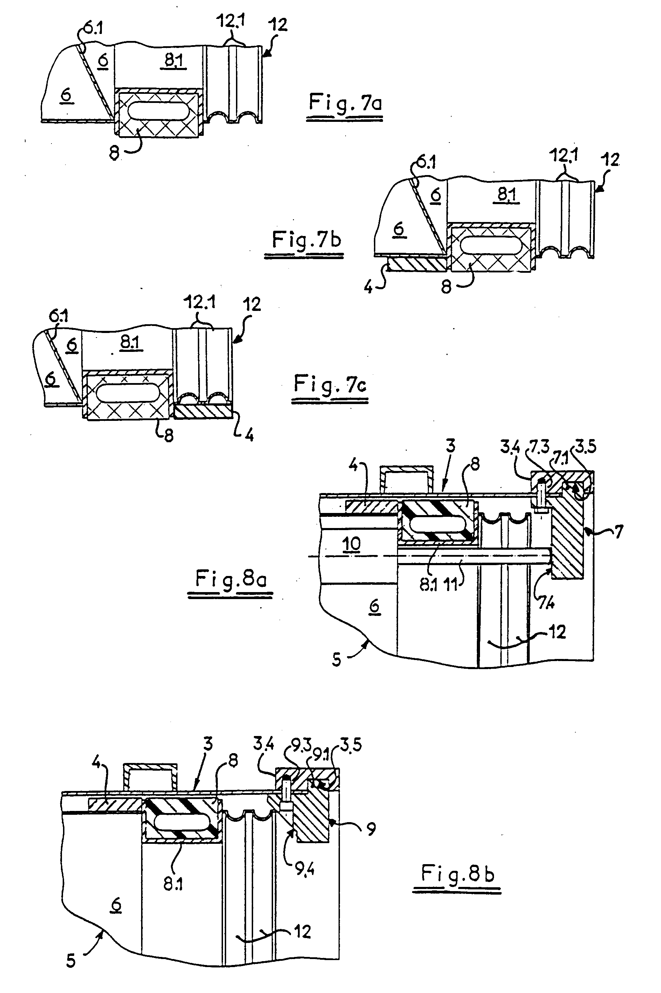

Die Figuren 7 zeigen eine Vergrößerung der Einzelheit "B" der Figur 6b; dabei ist die Figur 7a eine vergrößerte Darstellung der Einzelheit, wobei hier ein Schnitt gewählt wurde, außerhalb der ringsum etwa gleichmäßig verteilten Führungsleiste. Dadurch sind sowohl das nach außen geöffnete C-Profil 8.1 der Dichtungsaufnahme und die darin eingelegte Dichtung 8 als auch der der Hülse 6 vorgesetzte Stauchring 12 mit seinen beiden Wellen 12.1 deutlich erkennbar. Das C-Profil 8.1 der Dichtungsaufnahme ist bis nahezu an die (hier nicht näher dargestellte) Innenseite der Wandung des Entsorgungsbehälters 3 geführt, so daß die Dichtung 8 selbst so beidseits gut gestützt ist. Der verbleibende Spalt ist dabei so klein, daß ein "Umkippen" der Dichtung und ein Einklemmen nicht erfolgen kann. Für ein gutes Entleeren kann die Dichtung 8 auch mit einer zur Ausstoßseite hin weisenden Lippe versehen sein. Die Dichtung 8 wirkt mit der Wandung des Entsorgungsbehälters 3 zusammen und dichtet die Druckkammer gegenüber der Saugkammer ab. Die Wellen 12.1 des Stauchringes 12 werden beim Auflaufen auf die Stoppanschläge 9 zusammengedrückt, wobei kinetische Energie des Ausstoßkolbens in Verformungsarbeit umgesetzt wird und darüberhinaus diese Stoppanschläge den Kolben, der nach dem Stauchen des Stauchringes 12 allenfalls noch einen Rest an kinetischer Energie besitzt, mechanisch anhält. Die Figuren 7b und 7c zeigen den entsprechenden Schnitt, jedoch jeweils im Bereich einer der Führungsleisten 4, die ringsum auf der Außenseite der Hülse 6 des Ausstoßkolbens 5 verteilt angeordnet angeordnet sind. Dabei ist in der Darstellng der Figur 7b die Führungsleiste 4 der Dichtung in Ausstoßrichtung nachgeordnet, während in der Figur eine andere Ausführungsform des Ausstoßkolbens 5 darstellt ist, bei der die Führungsleiste 4 -wiederum in Ausstoßrichtung gesehen- der Dichtung vorgeordnet ist. Bei der Ausführungsform nach Fig. 7b stößt bei einem Störfall der Frontring der Hülse 6, der die umlaufende Dichtungsaufnahme 8.1 mit einschließt, gegen die Stoppanschläge 9; die dabei auftretenden Kräfte werden über diesen Frontring auf den Stauchring 12 übertragen, der sich dann unter Verbrauch von kinetische Energie verformt. Während bei der Ausführungsform nach Fig. 7b der Stauchring 12 frei ist und von den Stoppanschlägen 9 gestaucht werden kann, liegen der Ausführungsform nach Fig. 7c die Führungsleisten 4 im Bereich des Stauchringes; dieser wird jedoch dadurch nicht wesentlich versteift, da die Führungsleisten nur einen kleinen Winkelberich abdecken, jedoch wird die zum Zusammendrücken des Stauchringes notwendige Verformungsarbeit vergrößert, da im Bereich der Führungsleisten 4 der Stauchring 12 bei einem Auftreffen auf die Stoppanschläge 9 in seiner Lage verbleibt, während er zwischen diesen Führungleisten gestaucht wird, so daß sich eine zusätzliche Verformung der Wellen 12.1 im Bereich der Führungsleisten 4 ergibt. Der dargestellte Ausschnitt des Austoßkolbens 5 zeigt das saugkammerseitige Ende der Hülse 6 mit eingesetzter Trennwand 6.1. Die als umlaufendes C-Profil 8.1 ausgebildete Dichtungsaufnahme kann seinerseits mit zum Stoppen des Ausstoßkolbens 5 beitragen und durch Verformung des Stauchringes 12 noch nicht abgebaute kinetische Energie unter eigener Verformung zu übernehmen. Auch kann der Stauchring 12 der Dichtungsaufnahme 8.1 nachgeordnet sein; in diesem Falle stößt diese an die Stoppanschläge 9 an und überträgt so die beim Aufstoßen auftretende Kraft auf den Stauchring, der sich dann verformt. Bei dieser Anordnung liegen die Dichtungen 8, insbesondere wenn sie mit ausstoßseitgen Lippen vershen sind, näher an der Mündung der Zweikammer-Entsorgungsbehälters, so daß der verbleibende Spalt verringert ist.

Die Figuren 8 zeigen eine vorteilhafte Ausbildung der Bremsanschläge 7 (Fig. 8a) und der Stoppanschläge 9 (Fig. 8b) und deren Befestigung im Endflansch 3.4 des Entsorgungsbehälter 3, der nahe dem Endflansch 3.4 ein (nicht näher bezeichnetes) Verstärkungsprofil aufweist. In dem Endflansch 3.4 befindet sich eine umlaufende Nut 3.5, in die sowohl die Füße 7.1 der Bremsanschläge 7 als auch die Füße 9.1 der Stoppanschläge 9 formschlüssig eingesetzt und mit Schrauben 7.3 bzw. 9.3 festgelegt sind. Die Bremsanschläge 7 und die Stoppanschläge 9 ragen dabei soweit in das Innere des Entsorgungsbehälters 3, daß zum einen die Kolbenstangen 11 der Dämpfungszylinder 10 an die Bremsanschläge 7 stoßen, und daß zum anderen der Stauchring 12 an die Stoppanschläge 9 anstößt und dort verformt wird. Dabei ist die Höhe der Bremsanschläge 7 wegen der weiter nach innen liegenden Kolbenstange/-n 11 des/der Dämpfungszylinders/-der 10 größer, als die der Stoppanschläge 9, deren Höhe vorteilhaft so klein gehalten wird, das eine Kolbenstange 11, die möglicherweise durch ein Verdrehen des Ausstoßkolbens 6 neben dem zugeordneten Bremsanschlag liegen, nicht an dem Stoppanschlag 9 anstößt, sonderen diesen innen passieren kann und die Stoppanschläge nicht als Bremsanschläge wirken. Die Länge der Kolbenstange 11 ist dabei derart, daß der Dämpfungszylinder zu nahezu 100% eingedrückt ist, wenn der Stauchring 12 die rampenförmige Auflaufläche 9.4 erreicht. Dadurch wird/werden zunächst die Kolbenstange/-n 11 des/der Dämpfungsgszylinder 10 auf die Bemsanschlag/-schläge 7 auftreffen, erst wenn deren Kolbenstangen weitgehend eingedrückt sind, trifft der Stauchring 12 auf die Stoppanschläge 9. Diese Brems- bzw. Stoppanschläge 7 bzw. 9 werden vorteilhaft in die umlaufende Nut 3.5 mit der der Kolbenstange 11 zugewandten Anstoßfläche 7.4 bzw. Auflauffläche 9.4 eingesetzt. Dadurch wirkt das beim Stoppen des Ausstoßkolbens 5 auftretende Moment so, daß die Anschläge 7 bzw. 9 in die Nut 3.5 gedrückt werden. Für den (dargestellten) Fall des Zusammenwirkens von Dämpfungszylindern 10 mit einem Stauchring 12 am Ausstoßkolben 5 ist es vorteilhaft, die Lage der Wirkflächen 7.4 der Bremsanschläge 7 umzukehren. Damit wird erreicht, daß der Stauchring 12 nicht unmittelbar auch auf diese Bremsanschläge 7 auflaufen kann, sondern von den hier als Schrägen ausgebildeten Auflaufflächen 9.4 der Stoppanschlägen 9 abgefangen und verformt wird. Um auch hier eine Abstützung zu erreichen, wird vorteilhaft ein auf den der dem Ausstoßkolben 5 abgewandten Seite ein (nicht näher dargestellter) Überstand vorgesehen, der das wegen des Abstandes der Lage des Kraftangriffes gegenüber dem Widerlager in der Nut auftretenden Momentes aufzunehmen in der Lage ist.

## Patentansprüche

1. Zweikammer-Entsorgungsbehälter, insbesondere von Entsorgungsfahrzeugen, mit einem axial verschiebbaren Ausstoßkolben, der dessen erste, als Saugkammer ausgebildete Kammer mit öffenbarem Deckel von der zweiten als Druckkammer ausgebildeten Kammer trennt, mit einer von der mit nach innen gerichteten Anschläge zum Stoppen des bewegten Ausstoßkolbens versehenen Behälterwandung geführten Hülse, deren Lumen mit einer Absperrplatte verschlossen ist und die mit der Innenseite der Behälterwandung zusammenwirkende Führungs- und Dichtungsmittel aufweist, **dadurch gekennzeichnet,** daß die Hülse (6) des Ausstoßkolbens (5) einen vorgewellten Stauchring (12) aufweist, wobei die am Rand des Aufnahmebehälters (3) angeordneten Stoppanschläge (9), die mit dem Stauchring (12) zusammenwirken, vorzugsweise oberhalb des Sohlenbereichs des Aufnahmebehälters (3) angeordnet sind. des Ausstoßkolbens (5) einen vorgewellten Stauchring (12) aufweist, wobei die am Rand des Aufnahmebehälters (3) angeordneten Stoppanschläge (9), die mit dem Stauchring (12) zusammenwirken vorzugsweise oberhalb des Sohlenbereichs des Aufnahmebehälters (3) angeordnet sind.

2. Zweikammer-Entsorgungsbehälter nach Anspruch 1, **dadurch gekennzeichnet,** daß die Stoppanschläge (7) als etwa rechtwinklig zur Wandung des Zweikammer-Entsorgungsbehälters (3) radial nach innen gerichtete, vorzugsweise mit ihr verbundene Bolzen ausgebildet sind.

3. Zweikammer-Entsorgungsbehälter nach Anspruch 1, **dadurch gekennzeichnet,** daß der/die Bremsanschlag/-schläge (7) als etwa rechtwinklig zur Wandung des Zweikammer-Entsorgungsbehälters radial nach innen gerichtete, vorzugsweise in eine umlaufende Nut eingesetzte und mit der Wandung verbundene Formstücke ausgebildet ist/sind, wobei sich die der Rundung der Wandung angepaßten Formstücke über einen gewissen Winkelbereich erstrecken.

4. Zweikammer-Entsorgungsbehälter nach Anspruch 1, 2 oder 3, **dadurch gekennzeichnet,** daß als Führungs- und Dichtmittel eine in dem Ringraum zwischen Außenseite der Wandung der Hülse (6) und Innenseite der Wandung des Behälters angeordnete, diesen füllende Packung ausgebildet sind.

5. Zweikammer-Entsorgungsbehälter nach Anspruch 1, 2 oder 3, **dadurch gekennzeichnet,** daß als Führungsmittel über den Umfang der Hülse (6) des Ausstoßkolbens (5), vorzugsweise gleichmäßig verteilt, Führungsleisten (4) vorgesehen sind.

6. Zweikammer-Entsorgungsbehälter nach Anspruch 1, 2 oder 3, **dadurch gekennzeichnet,** daß die Dichtmittel als umlaufende, vorzugsweise mit einem Druckfluid aufblasbare Schlauchdichtungen ausgebildet sind.

7. Zweikammer-Entsorgungsbehälter nach Anspruch 6, **dadurch gekennzeichnet,** daß zumindest eine umlaufende Dichtung als saugkammerseitige Dichtung (8) ausgebildet, in einer ringförmigen Dichtungsaufnahme (8.1) aus einem der Hülse vor-gesetzten C-Profil angeordnet ist, wobei vorzugsweise der Boden der Dichtungsaufnahme (8.1) gegenüber der Hülse (6) nach innen versetzt ist.

8. Zweikammer-Entsorgungsbehälter nach Anspruch 6 oder 7, **dadurch gekennzeichnet,** daß der Stauchring (12) der die saugkammerseitige Dichtung (8) aufnehmenden Dichtungsaufnahme (8.1) vorgesetzt ist.

9. Zweikammer-Entsorgungsbehälter nach Anspruch 6 oder 7, **dadurch gekennzeichnet,** daß der Stauchring (12) der die saugkammerseitige Dichtung (8) aufnehmenden Dichtungsaufnahme (8.1) nachgesetzt ist.

10. Zweikammer-Entsorgungsbehälter nach einem der Ansprüche 1 bis 9, **dadurch gekennzeichnet,** daß die Hülse (6) des Ausstoßkolbens (5) im Bereich der druckkammerseitigen Führungsleisten (4) und seiner unteren Hälfte mit einem einen Stauchboden (13) bildenden Segment mit achsparallel zumindest über 1/3 der Länge der Hülse (6) verlaufenden Rinnen (13.1) versehen ist.

11. Zweikammer-Entsorgungsbehälter nach Anspruch 10, **dadurch gekennzeichnet,** daß die achsparallel verlaufenden Rinnen (13.1) des Stauchbodens (13) vorzugsweise nach innen abgerundet ausgebildet und in gleichmäßigen Abständen angeordnet sind.

12. Zweikammer-Entsorgungsbehälter nach einem der Ansprüche 1 bis 11, **dadurch gekennzeichnet,** daß die Hülse (6) mit mindestens einem kinetische Energie aufzehrendem Dämpfungsglied versehen ist, wobei korrespondierend zu den Dämpfungsgliedern jeweils ein mit einem der Dämpfungsglieder zusammenwirkender Bremsanschlag (7) auf der Wandung des Zweikammer-Entsorgungsbehälters (3) vorgesehen ist, wobei der/die mit dem/den Dämpfungsglied/-gliedern zusammenwirkende/-n Bremsanschlag/-schläge in 12-Uhr Position bzw. symmetrisch dazu beidseits angeordnet sind, und die mit auf der Wandung des Zweikammer-Entsorgungsbehälters (3) angeordneten Bremsanschlägen (7) zusammenwirken.

13. Zweikammer-Entsorgungsbehälter nach Anspruch 12, **dadurch gekennzeichnet,** daß das vorzugsweise als hydraulisch arbeitender Zylinder (10) ausgebildete Dämpfungsglied ein zusätzliches, energiespeicherndes Dämpfungselement aufweist.

14. Zweikammer-Entsorgungsbehälter nach einem der Ansprüche 1 bis 13, **dadurch gekennzeichnet,** daß Mittel vorgesehen sind, zur Begrenzung des Weges des öffenbaren Deckels (3.1) des Behälters (3) auf einen Schwenkwinkel kleiner 90°.
